# EUROPEAN PATENT APPLICATION

(11) **EP 3 355 256 A1**
(43) Date of publication of application: **01.08.2018**
(21) Application number: 18162885.0
(22) Date of filing: 07.08.2012
(51) Int. Cl.: G06Q 30/06

(54) **METHOD, APPARATUS AND SYSTEM FOR PROVIDING SHOPPING SERVICE USING INTEGRATING SHOPPING CART**

(30) Priority: 29.09.2011 KR 20110098778
(62) Divisional of application: 12834800.0
(71) Applicant: Samsung Electronics Co., Ltd., Gyeonggi-do 16677 (KR)
(72) Inventor: Kim, Bo-Min, Seoul (KR); Kim, Joon-Hwan, Yongin-si (KR); Min, Chan-Hong, Yongin-si (KR)
(74) Representative: Nederlandsch Octrooibureau

(57) **Abstract**

A method, an apparatus, and a system for operating of a server that generates an integrating shopping cart are provided. The method of the server includes identifying a user doing online shopping through a communication device; monitoring the online shopping of the user; obtaining online shopping information of the user, based on the monitoring; and storing the online shopping information of the user.

## Description

### BACKGROUND OF THE INVENTION

This is a divisional application derived from the parent European patent application No. 12834800.0. All the contents of the parent European patent application No. 12834800.0 are hereby incorporated by reference.

### 1. Field of the Invention

The present invention relates generally to a shopping service, and more particularly, to a method, an apparatus, and a system for managing product information provided from a plurality of online shopping malls, product information of a plurality of offline stores, and information of a desired product of a third party, which is sharable, using an integrating shopping cart, and providing a shopping service using the integrating shopping cart.

### 2. Description of the Related Art

With the advance of Internet, an e-commerce market is formed and the utilization of online shopping is continually increasingly. A major advantage of online shopping is that a user can purchase a desired product and receive the product at a desired place, without having to visit the shop in person. While various large-scale online shopping malls have been created, these shopping malls still manage their products independently. Accordingly, a shopping cart of the shopping mall is only applicable to the products of the corresponding shopping mall.

Further, because a user cannot physically inspect a product when shopping online, i.e., a user is presented only with a photo image of a product, and cannot check physical features such as quality, weight, actual color, etc., the user may regret the purchase of the product. This is one of the drawbacks of online shopping. That is, when a user purchases a product in an offline store after being able to view or try on the product in person, customer satisfaction for the purchase is generally higher.

Additionally, conventional online shopping adds products to be purchased by a user to a shopping cart of an e-commerce site used to buy various products, reserves the product the user is likely to buy, places a product in a corresponding shopping cart in the e-commerce site according to a user request, and recommends products based on purchase patterns of a user. As such, conventional online shopping provides corresponding product information through an intelligent shopping cart by interconnecting an e-commerce server and a client Personal Computer (PC) over a communication network to perform active marketing on many e-commerce users and to promote sales.

However, because the shopping cart is specialized for e-commerce, it is not easy to acquire information about a store, which sells the product, and additional information of product inventory of the store.

### SUMMARY OF THE INVENTION

Accordingly, the present invention is designed to address at least the problems and/or disadvantages described above and to provide at least the advantages described below.

In this regard, an aspect of the present invention is to provide a method, apparatus, and system using an integrating shopping cart, which collectively manages a shopping cart function of an online shopping mall and shopping information of an offline store.

Another aspect of the present invention is to provide a method and an apparatus for providing a shopping service using an integrating shopping cart that interconnects various online shopping malls and a physical store that sells a corresponding product.

Another aspect of the present invention is to provide a system for providing a shopping service using an integrating shopping cart that interconnects various online shopping malls and a store that sells a corresponding product.

Another aspect of the present invention is to provide a method and an apparatus for providing shopping information to a user using a shopping cart function that interconnects various online shopping malls and a store that sells a corresponding product.

Another aspect of the present invention is to provide a system for providing shopping information to a user using a shopping cart function that interconnects various online shopping malls and a store that sells a corresponding product.

In accordance with an aspect of the present invention, an operating method is provided for a server that generates an integrating shopping cart. The method includes identifying a user doing online shopping through a communication device; monitoring the online shopping of the user; obtaining online shopping information of the user, based on the monitoring; and storing the online shopping information of the user.

In accordance with another aspect of the present invention, a method for providing a shopping service using an integrating shopping cart in a mobile device is provided. The method includes generating the integrating shopping cart for a user of the mobile device for collectively managing a product sold by at least one of a plurality of online shopping malls and a plurality of offline stores, in a server; receiving, from the server, a notification that an offline store that sells the product is located within a certain distance from the mobile device; displaying a notification message corresponding the notification; and guiding the user of the mobile device to the offline store that sells the product.

In accordance with another aspect of the present invention, a method for providing a shopping service using an integrating shopping cart in a server is provided. The method includes databasing an integrating shopping cart for collectively managing products sold by an online shopping malls and an offline store; based on location information of a mobile device, identifying that the offline store selling a product included in the integrating shopping cart is located within a certain distance from the mobile device; and informing the mobile device that the offline store selling the product is located within the certain distance from the mobile device.

In accordance with another aspect of the present invention, an apparatus is provided for a server that generates an integrating shopping cart. The apparatus includes a controller that identifies that a user is online shopping through a communication device, monitors the online shopping of the user, and obtains online shopping information of the user based on the monitoring; and a database for storing the online shopping information of the user.

In accordance with another aspect of the present invention, an apparatus for providing a shopping service using an integrating shopping cart is provided. The apparatus includes a controller that generates an integrating shopping cart for collectively manages products sold an online shopping mall and an offline store; a communicator that receives, from a server, a notification that the offline store that sells a product of the integrating shopping cart is located within a certain distance from a mobile device of a user; and a display that displays a notification message informing the user that the offline store selling the product is located within the certain distance from the mobile device, and displays a route to the offline store.

In accordance with another aspect of the present invention, an apparatus is provided for a server that provides a shopping service using an integrating shopping cart. The apparatus includes a database that databases the integrating shopping cart for collectively managing products sold by an online shopping mall and an offline store; a controller that determines whether the offline store that sells a product of the integrating shopping cart is located within a certain distance from a mobile device of the user; and an interface for informing the mobile device that the offline store selling the product is located within the certain distance from the mobile device.

### BRIEF DESCRIPTION OF THE DRAWINGS

The above and other aspects, features, and advantages of certain embodiments of the present invention will be more apparent from the following description taken in conjunction with the accompanying drawings, in which:
FIG. 1 illustrates a shopping service system using an integrating shopping cart according to an embodiment of the present invention;
FIG. 2 is a flowchart illustrating a smart mobile device method for managing an integrating shopping cart according to an embodiment of the present invention;
FIG. 3 is a flowchart illustrating a server method for managing an integrating shopping cart according to an embodiment of the present invention;
FIG. 4 is a flowchart illustrating a server method for managing an integrating shopping cart according to an embodiment of the present invention;
FIG. 5 is a flowchart illustrating an integrating shopping cart server method for providing a shopping service using an integrating shopping cart according to an embodiment of the present invention;
FIG. 6 is a flowchart illustrating a smart mobile device method for providing a shopping service using an integrating shopping cart according to an embodiment of the present invention;
FIG. 7 illustrates an integrating shopping cart according to an embodiment of the present invention;
FIG. 8 illustrates product information of an integrating shopping cart according to an embodiment of the present invention;
FIG. 9 illustrates an integrating shopping cart server apparatus according to an embodiment of the present invention; and
FIG. 10 illustrates a smart mobile device according to an embodiment of the present invention.

Throughout the drawings, like reference numerals will be understood to refer to like parts, components, and structures.

### DETAILED DESCRIPTION OF THE INVENTION

Various embodiments of the present invention will now be described in detail with reference to the accompanying drawings. In the following description, specific details such as detailed configuration and components are merely provided to assist the overall understanding of these embodiments of the present invention. Accordingly, those of ordinary skill in the art will recognize that various changes and modifications of the embodiments described herein can be made without departing from the scope of the invention. In addition, descriptions of well-known functions and constructions may be omitted for clarity and conciseness.

In accordance with an embodiment of the present invention, a method, an apparatus, and a system are provided for managing product information provided from a plurality of online shopping malls, product information of a plurality of offline stores, and information of a desired product of a third party, which is sharable, using an integrating shopping cart, and providing a shopping service using the integrating shopping cart.

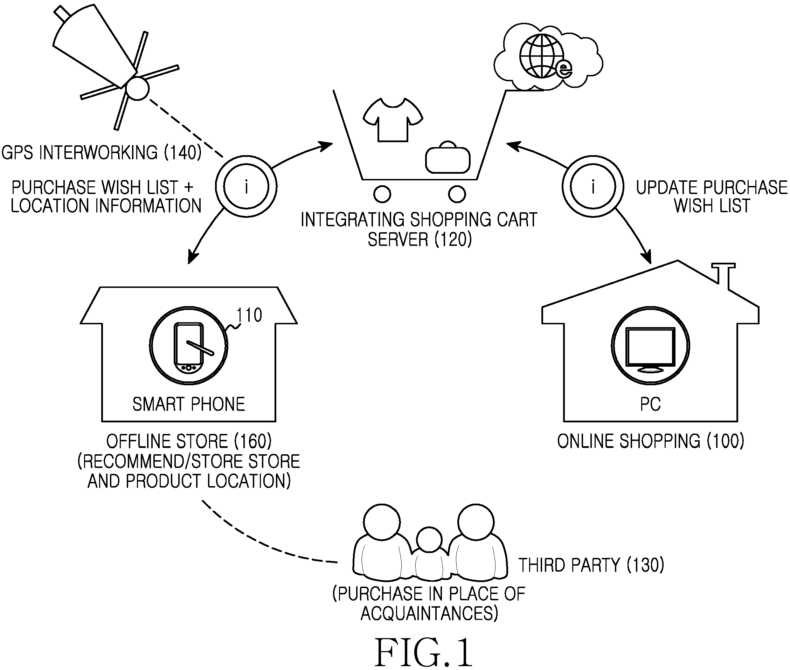

FIG. 1 illustrates a shopping service system using an integrating shopping cart according to an embodiment of the present invention.

Referring to FIG. 1, the shopping service system includes an online shopping mall 100, an integrating shopping cart server 120, a smart mobile device 110 for providing a desired product from the offline store 160 to the integrating shopping cart server 120,the offline store 160, and a Global Positioning System (GPS) satellite apparatus 140. Although FIG. 1 illustrates one online shopping mall and one offline store, the present invention is applicable to a system including more online shopping malls and offline stores.

Using a computer, a notebook, or the smart phone mobile device 110, the user provides a desired product from the online shopping mall 100 to the integrating shopping cart server 120. For example, basic information, e.g., a type of the online shopping mall, a product name, an option, a Uniform Resource Locator (URL), a price, etc., is stored and managed by the integrating shopping cart server 120.

When shopping for the product in the offline store 160, the user recognizes information of the desired product, e.g., a store name, a product type, a product name, a product model, and a store address or location information, through the smart mobile device 110 and then provides the information to the integrating shopping cart server 120. For example, the user can obtain the product information using a barcode or a Radio Frequency IDentification (RFID) tag. Alternatively, the user can directly register the product information through an input window.

Alternatively, based on short range communication or infrared communication, such information can be transmitted from a mobile device of a store clerk containing information of products displayed in the store to the mobile device 110 of the user and then to the integrating shopping cart server 120. Herein, the shopping information of the user can be sent to the integrating shopping cart server 120 in a single transmission, after the user finishes online shopping, or each time a user generates shopping information.

Alternatively, the same product can be sold through the Internet shopping mall or the offline store. Hence, the user can obtain and provide the product information of the online shopping mall 100 to the integrating shopping cart server 120 over the Internet, and at the same time obtain and provide the offline store information of the product sold in the online shopping mall 100 to the integrating shopping cart server 120.

Alternatively, even when the user does not provide the shopping information to the integrating shopping cart server 120, the integrating shopping cart server 120 can obtain the online shopping information of the user by monitoring the user who is shopping through the Internet.

Further, the user can easily locate the offline store 160 that sells the product added to the shopping cart of the online shopping mall 100 through the smart mobile device 110. The user can also check the type of the online store that sells the product of the offline store through the smart mobile device 110, and compare the product price registered in the online shopping mall 100 and the product price registered in the offline store 160.

The integrating shopping cart server 120 periodically receives the location information from the user. When the user is near the offline store 160 that sells the product placed in the integrating shopping cart, the integrating shopping cart server 120 provides the user with the corresponding offline store information and the product information.

The smart mobile device 110 of the user receives a signal notifying that the offline store 160 selling the product registered to the integrating shopping cart is located near the user, from the integrating shopping cart server 120, and informs the user by displaying the information or using a sound effect.

After receiving the notification, the smart mobile device 110 guides the user to the corresponding store location by executing an application such as map search. Thus, the user can easily locate the offline store 160 that has the product in stock.

Thereafter, when the user checks the product in person and does not like the product, the user can delete the product from the integrating shopping cart server 120, and may register a new product of the offline store 160 to the integrating shopping cart server 120.

If necessary, the user can classify and manage the integrating shopping cart into an integrating shopping cart for household items, an integrating shopping cart for fashion items, and an integrating shopping cart for presents.

Further, by sharing the integrating shopping cart with a third party 130, the user can share opinions about the product with the third party 130, and the third party 130 may purchase the product for the user.

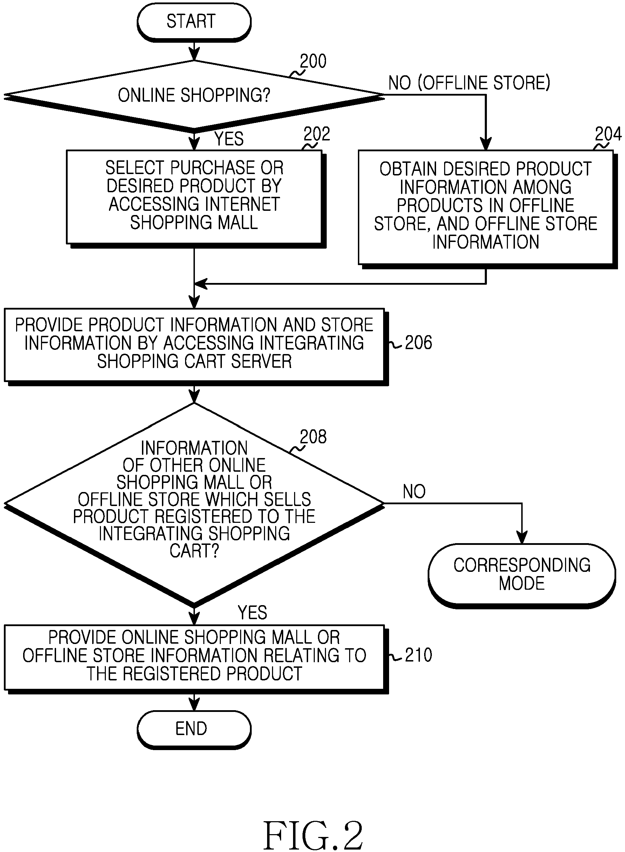

FIG. 2 is a flowchart illustrating a smart mobile device method for managing an integrating shopping cart according to an embodiment of the present invention.

Referring to FIG. 2, in step 200, the smart mobile device determines whether the user is online shopping or offline shopping. When online shopping, the smart mobile device accesses an online shopping mall and selects a desired product in step 202. When the product sold by the online shopping mall is also on sale in the offline store, the smart phone device obtains the information of the offline store in step 206. Alternatively, the smart mobile device can select a plurality of products in one online shopping mall or in a plurality of online shopping malls.

When the user is offline shopping in step 200, the smart mobile device obtains the user's desired product information (product name, model, and price) among the products sold by the offline store and the offline store information (store name, store address, store location, and URL) in step 204. Herein, the product information and the offline store information can be obtained using the barcode scanning, the RFID tag, or the user's direction input.

In step 206, the smart mobile device provides the product information and the offline store information to the integrating shopping cart server for registering them in the user's integrating shopping cart. Herein, it is assumed that the user's integrating shopping cart is generated in advance, i.e., before the user registers a product to the integrating shopping cart. Herein, steps 202 and 204 can be carried out by a separate application which provides the user's Internet shopping information or the offline store information to the integrating shopping cart. Alternatively, steps 202 and 204 can be performed on a separate platform of the smart phone.

The user frequently performs the step 202 and the step 204, and the user's shopping cart is updated in every occasion.

In step 208, the smart mobile device determines whether there is more information of another online shopping mall or offline store that sells the product registered to the integrating shopping cart. When detecting no more information, the smart mobile device enters the corresponding mode, i.e., continues with normal operations.

However, when the smart mobile device detects more information, the smart mobile device provides the integrating shopping cart server with the information of the online shopping mall or offline store relating to the product registered to the integrating shopping cart, in order to register the information to the integrating shopping cart in step 210.

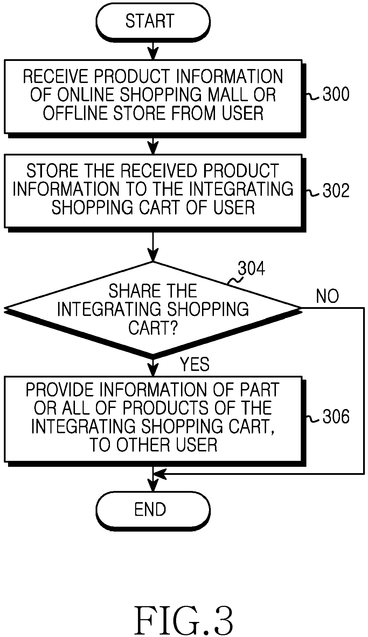

FIG. 3 is a flowchart illustrating a server method for managing an integrating shopping cart according to an embodiment of the present invention.

In step 300, the integrating shopping cart server receives the product information of the online shopping mall or the offline store and the online shopping mall or offline store information, from the user.

In step 302, the integrating shopping cart server stores the received product information and the online shopping mall or offline store information, to the user's integrating shopping cart. At this time, when the user divides the integrating shopping cart into a plurality of categories, for example, into the integrating shopping cart for household items, the integrating shopping cart for fashion items, and the integrating shopping cart for presents, the product information and the online shopping mall or offline store information received are stored to the corresponding integrating shopping cart.

When the integrating shopping cart of the user is shared in step 304, the integrating shopping cart server provides information of part or all of the products in the integrating shopping cart of the corresponding user, to a third party in step 306.

For example, the corresponding user may provide the third party with the information of part or all of the products in the integrating shopping cart to request the third party to buy the product added to the integrating shopping cart or to evaluate the product placed in the integrating shopping cart.

Further, the user can authorize all or some of the third parties to access part or all of the integrating shopping cart.

When the integrating shopping cart of the user is not shared in step 304, the integrating shopping cart server finishes this process.

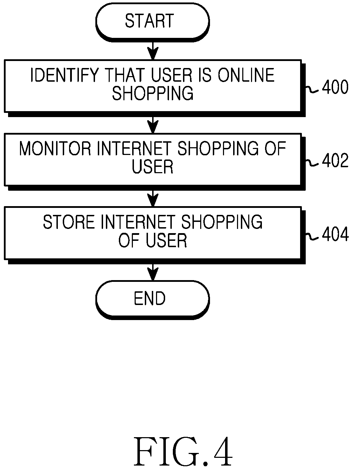

FIG. 4 is a flowchart illustrating a server method for managing an integrating shopping cart according to an embodiment of the present invention.

Referring to FIG. 4, in step 400, the integrating shopping cart server identifies that a user is performing online shopping in step 400, monitors the online shopping of the user in step 402, and stores the online shopping information (e.g., user's desired product information in the online shopping mall or the offline store) in step 404.

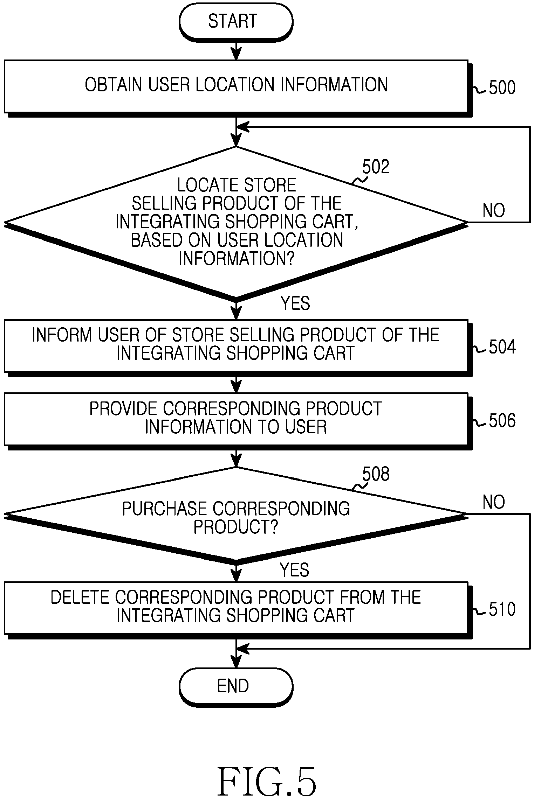

FIG. 5 is a flowchart illustrating an integrating shopping cart server method for providing a shopping service using an integrating shopping cart according to an embodiment of the present invention.

Referring to FIG. 5, in step 500, the integrating shopping cart server obtains location information of a user.

In step 502, based on the location information of the user, the integrating shopping cart server determines whether an offline store selling a product of the integrating shopping cart of the user is within a certain range of the user.

When the offline store is within the certain range, the integrating shopping cart server informs the user of the offline store selling the product in step 504.

In step 506, the integrating shopping cart server provides the user with the product information of the integrating shopping cart offered by the offline store.

In step 508, the integrating shopping cart server determines whether the user purchases the corresponding product in the offline store.

When the user purchases the corresponding product in the offline store, the integrating shopping cart server deletes the corresponding product related information from the integrating shopping cart of the user in step 510.

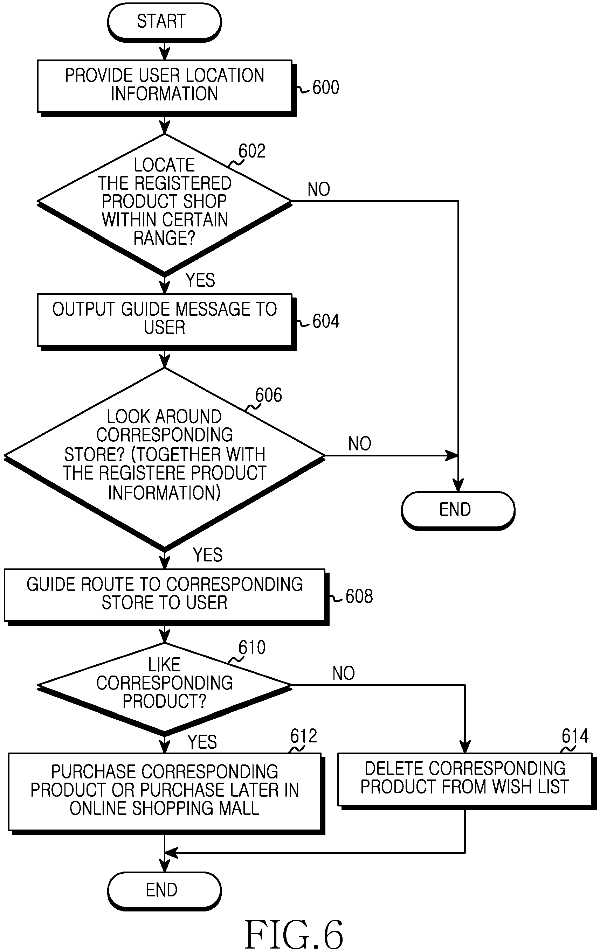

FIG. 6 is a flowchart illustrating a smart mobile device method for providing a shopping service using an integrating shopping cart according to an embodiment of the present invention.

Referring to FIG. 6, in step 600, the smart mobile device provides user location information to the integrating shopping cart server. The user location information can be acquired using a GPS receiver of the smart mobile device, or using a Location Based Service (LBS) function.

In step 602, the smart mobile device determines whether the offline store of the product registered to the integrating shopping cart is within a certain range of the user.

When locating the offline store is within the certain range, the smart mobile device outputs a sound effect and/or a message informing the user that the offline store of the product registered to the integrating shopping cart is within the certain range of the user, in step 604.

In step 606, the smart mobile device determines whether the user wants to go to the corresponding store. When the user wants to go to the corresponding store, the smart mobile device guides the user to the corresponding store, e.g., using a map application, in step 608.

When the user likes the corresponding item in step 610, the smart mobile device purchases the corresponding product in the offline store and then informs the integrating shopping cart server of the purchase in step 612. Alternatively, the user may buy the corresponding product in an online shopping mall after comparing prices.

However, when the user does not like the corresponding item, the smart mobile device informs the integrating shopping cart server to delete the corresponding product from the integrating shopping cart of the user in step 614.

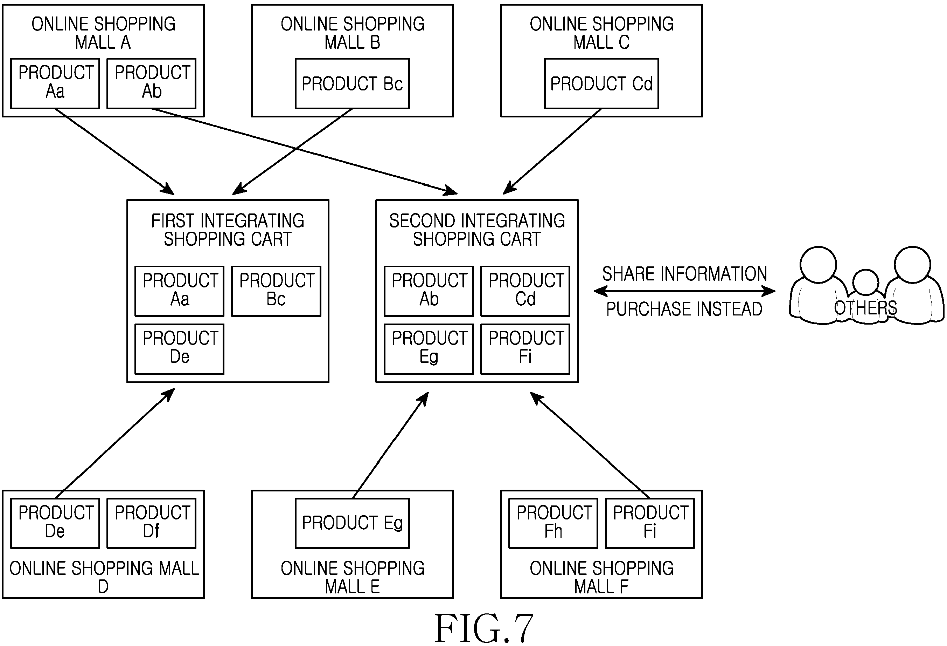

FIG. 7 illustrates an integrating shopping cart according to an embodiment of the present invention.

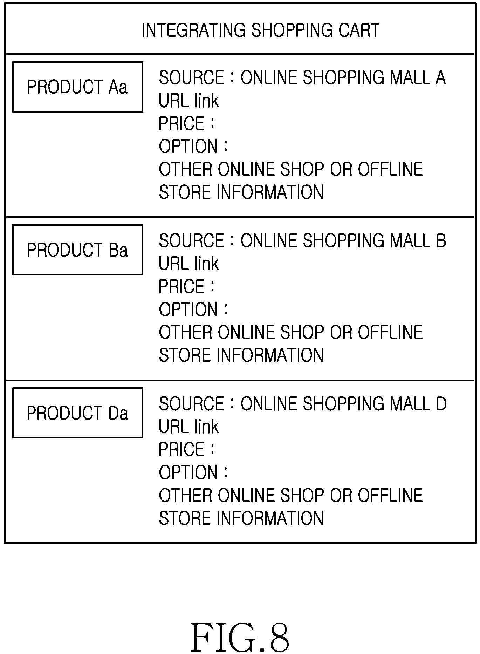

Referring to FIG. 7, the user can register products of online shopping malls A, B, and C to a first integrating shopping cart or a second integrating shopping cart respectively, and the integrating shopping cart displays location and detail information of each shopping mall (see FIG. 8).

The user can also recognize and manage the product information of offline shopping malls D, E, and F in the integrating shopping carts using the barcode or the RFID tag.

The integrating shopping cart may include the same or different products. For example, the first integrating shopping cart includes the product Aa of the online shopping mall A, the product Bc of the online shopping mall B, and the product De of the offline shopping mall D. The second integrating shopping cart includes the product Ab of the online shopping mall A, the product Cd of the online shopping mall C, the product Eg of the offline shopping mall E, and the product Fi of the offline shopping mall F.

Accordingly, a user can generate various integrating shopping carts and, if necessary, share any of the integrating shopping carts with a third party in order to share product information, to request to the third party to purchase the product, or to check the product.

FIG. 8 illustrates product information of an integrating shopping cart according to an embodiment of the present invention.

Referring to FIG. 8, each integrating shopping cart shows the location of the registered corresponding product and includes a link (e.g., a URL) for automatically connecting to the online shopping mall of the product. The integrating shopping cart also displays the online/offline shopping malls selling the products, e.g., in order to compare their prices, and guides the user to an offline shopping mall selling the product, based on the user location information.

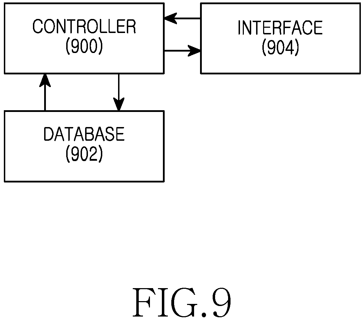

FIG. 9 illustrates an integrating shopping cart server apparatus according to an embodiment of the present invention.

Referring to FIG. 9, the integrating shopping cart server includes a controller 900, a database 902, and an interface 904.

The controller 900 controls the server and manages the integrating shopping cart for collectively managing the product information sold by the online shopping malls and the offline stores. For example, the controller 900 receives, from the user, the product information sold in the online shopping mall or the offline store and information about the online shopping mall or the offline store, through the interface part 706, and stores the received product information and information about the online shopping mall or offline store to the database 902. The controller 900 also provides the contents of the integrating shopping cart of a sharing user to another user, i.e., third party.

Also, the controller 900 provides the user with the shopping information based on user location information. For example, the controller 900 obtains the location information of the user, determines whether an offline store that sells a product of the integrating shopping cart of the user is within a certain range of the user, based on the user location information, and informs the user of the determination result. When the user purchases the corresponding product in the online shopping mall or in the offline store, the controller 900 deletes the corresponding product related information from the integrating shopping cart of the user.

The database 902 databases, stores, and manages the integrating shopping cart of the users under control of the controller 900.

The interface part 904 sends a data signal or a control signal from the controller 900 to the user, or sends a data signal or a control signal from the user to the controller 900, e.g., over a backbone network.

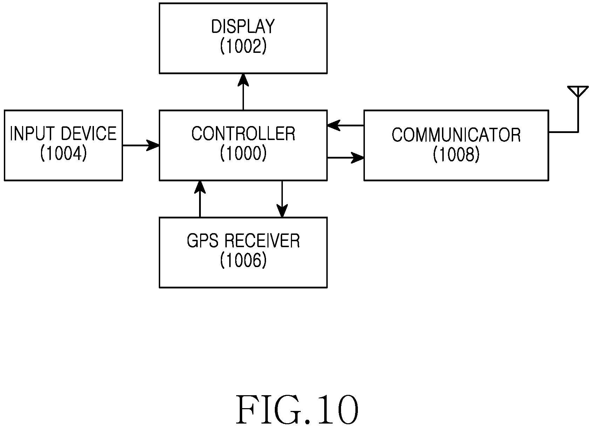

FIG. 10 illustrates a smart mobile device according to an embodiment of the present invention.

Referring to FIG. 10, the smart mobile device includes a controller 1000, a display 1002, an input device 1004, a GPS receiver 1006, and a communicator 1008.

The controller 1000 controls the smart mobile device and controls the shopping service of the user using the integrating shopping cart. For example, the controller 1000 selects the purchased or desired product by accessing the corresponding online shopping mall, and registers the product information and the corresponding online shopping mall information to the integrating shopping cart. When the product of the online shopping mall is on sale in the offline store, the controller 1000 also obtains the offline store information.

When the user shops for the product of the offline store, the controller 1000 obtains the user's desired product information (product name, model, and price) among the products sold by the offline store and the offline store information (store name, store address, store location, URL, etc.), and registers the obtained information to the integrating shopping cart. Herein, the product information and the offline store information can be obtained using the barcode scanning, the RFID tag, or the user's direction input.

The controller 1000 provides the integrating shopping cart server with the user location information received from the GPS receiver 1006. When locating the offline store of the product registered to the integrating shopping cart within a certain range, the controller 1000 outputs a message informing the user that the offline store of the product registered to the integrating shopping cart is within a certain range of the user, through the display 1002. Additionally, using a map application, the controller 1000 guides the user to the store.

The controller 1000 purchases the corresponding product in the offline store or the online shopping mall and notifies the purchase to the integrating shopping cart. When the user does not like the corresponding item, the controller 1000 notifies the integrating shopping cart server to delete the corresponding product from the integrating shopping cart of the user.

The display 1002 displays status information during the operations of the smart mobile device, various videos, and various still images. For example, the display 1002 may include a Liquid Crystal Display (LCD).

When the offline store of the product registered to the integrating shopping cart is located within a certain range of the user, the display 1002 outputs a message indicating that the offline store of the product registered to the integrating shopping cart is located within the certain range, under the control of the controller 1000.

The input device 1004 includes, for example, a plurality of function keys such as number keys 0 ∼ 9, a menu key, a cancel (delete) key, an OK key, a TALK key, an END key, an Internet access key, navigation keys (up/down/left/right), etc. The input device 1004 provides the controller 1000 with key input data corresponding to the key pressed by the user. Additionally, the input device 1004 may include a touch screen of the display 1002.

The GPS receiver 1006 receives the location information including current longitude and latitude, speed, altitude, and bearings, from a GPS satellite, and provides the received location information to the controller 1000.

The communicator 1008 down-converts a Radio Frequency (RF) signal received over an antenna to a baseband signal and provides the baseband signal to the controller 1000, or up-converts a baseband signal to an RF signal and transmits the RF signal over the antenna. For example, according to Code Division Multiple Access (CDMA) communication scheme, the communicator 1008 channel-encodes and spreads the data to transmit, and despreads and channel-decodes the received signal.

Additionally, the above-described embodiments of the present invention can be implemented as hardware or a combination of software and hardware.

For example, a computer-readable storage medium for storing one or more programs (software modules) can be provided. One or more programs stored to the computer-readable storage medium are configured for execution of one or more processors of an electronic device. One or more programs include instructions making the electronic device execute the methods according to the above-described embodiments of the present invention.

Such programs can be stored to a random access memory, a non-volatile memory including a flash memory, a Read Only Memory (ROM), an Electrically Erasable Programmable ROM (EEPROM), a magnetic disc storage device, a Compact Disc ROM (CD-ROM), Digital Versatile Discs (DVDs), or other optical storage devices, and a magnetic cassette. Alternatively, the programs can be stored to a memory combining part or all of those recording media. A plurality of memories may also be utilized.

As set forth above, because the user can manage the desired product information by integrating the product information of the online shopping mall and the product information of the offline store, the integrated information can be used as a more efficient integrating shopping list.

The user registers desired product information of the online shopping mall and then receives the information of the store selling the registered product based on the location information. Accordingly, the user can view the desired product in the store, in person, increasing customer satisfaction.

Further, by sharing the integrating shopping cart with another user, i.e., a third party, the user can ask the third party to purchase the product, exchange the store information or the product information, check the product in place of the third party, give or receive a review of the product to or from the third party, etc.

When shopping in the store, the user can view the product stored in the shopping cart of the online shopping and then determines whether or not to purchase the product after receiving the store information or the product information. Therefore, the product price of the online shopping mall and the product price of the offline store may be compared and provided to the user, such that the user can do the shopping economically.

While the present invention has been shown and described with reference to certain embodiments thereof, it will be understood by those skilled in the art that various changes in form and details may be made therein without departing from the scope of the present invention as defined by the appended claims.

Some examples are provided in following clauses.

An operating method of a server for generating an integrating shopping cart, the method comprising:
identifying a user doing online shopping through a communication device;
monitoring the online shopping of the user;
obtaining online shopping information of the user, based on the monitoring; and
storing the online shopping information of the user.

In such a method, the online shopping information of the user may be managed in the integrating shopping cart,
wherein the integrating shopping cart may be provided to a third party,
wherein the integrating shopping cart may be accessible by the third party.

A method for providing a shopping service using an integrating shopping cart in a mobile device, the method comprising:
generating the integrating shopping cart for a user of the mobile device for collectively managing a product sold by at least one of a plurality of online shopping malls and a plurality of offline stores, in a server;
receiving, from the server, a notification that an offline store that sells the product is located within a certain distance from the mobile device;
displaying a notification message corresponding the notification; and
guiding the user of the mobile device to the offline store that sells the product.

Such a method may further comprise registering the product to the server, in the generated integrating shopping cart,
wherein registering of the product may comprise:
accessing an online shopping mall; and
providing the server with information of the product desired by the user and information about the online shopping mall, or provides the server with information of products sold by an offline store and information of the offline store.

Such a method may further comprise informing the server of a purchase result of the product in the offline store that sells the product.

Such a method further comprise providing the server with location information of the user.

Such a method further comprise sharing the integrating shopping cart with a third party.

A method for providing a shopping service using an integrating shopping cart in a server, the method comprising:
databasing an integrating shopping cart for collectively managing products sold by an online shopping malls and an offline store;
based on location information of a mobile device, identifying that the offline store selling a product included in the integrating shopping cart is located within a certain distance from the mobile device; and
informing the mobile device that the offline store selling the product is located within the certain distance from the mobile device.

In such a method databasing of the integrating shopping cart may comprise:
generating the integrating shopping cart for a user in a database; and
registering a product sold by the online shopping mall or the offline store to the database in the integrating shopping cart.

In such a method registering the product sold by the online shopping mall or the offline store to the database in the integrating shopping cart may comprise at least one of :
receiving, from the mobile device, information about the product desired by the user and information about the online shopping mall; and
receiving, from the mobile device, information of products sold by the offline store and information about the offline store.

Such a method may further comprise:
receiving a purchase result of the product from the mobile device; and
updating the integrating shopping cart according to the purchase result of the corresponding product,
further comprising receiving location information of the user from the mobile device,
further comprising providing the integrating shopping cart of the mobile device to a third party .

An apparatus of a server for generating an integrating shopping cart, the apparatus comprising:
a controller that identifies that a user is online shopping through a communication device, monitors the online shopping of the user, and obtains online shopping information of the user based on the monitoring; and
a database for storing the online shopping information of the user.

An apparatus for providing a shopping service using an integrating shopping cart, the apparatus comprising:
a controller that generates an integrating shopping cart for collectively manages products sold an online shopping mall and an offline store;
a communicator that receives, from a server, a notification that the offline store that sells a product of the integrating shopping cart is located within a certain distance from a mobile device of a user; and
a display that displays a notification message informing the user that the offline store selling the product is located within the certain distance from the mobile device, and displays a route to the offline store.

Such an apparatus may further comprise a Global Positioning System (GPS) for providing the server with location information of the user.

An apparatus of a server for providing a shopping service using an integrating shopping cart, the apparatus comprising:
a database that databases the integrating shopping cart for collectively managing products sold by an online shopping mall and an offline store;
a controller that determines whether the offline store that sells a product of the integrating shopping cart is located within a certain distance from a mobile device of the user; and
an interface for informing the mobile device that the offline store selling the product is located within the certain distance from the mobile device.

## Claims

1. A method operated by a mobile device for providing a shopping service, the method comprising:
determining whether a user is performing an online shopping or an offline shopping;
if determined that the user is shopping online for a product, obtaining offline store information about the product when the product sold by an online shopping mall is also available in an offline store;
if determined that the user is shopping offline for the product, obtaining shopping information and offline store information about the product by recognizing a barcode or a Radio Frequency Identification, RFID, tag;
transmitting the shopping information and the offline store information about the product to a shopping cart server, in order to store the shopping information and the offline store information about the product to a shopping cart associated with the user in the shopping cart server;
obtaining user location information as, e.g., acquired by a GPS receiver of the mobile device or a Location Based Service, LBS,
transmitting said user location information to the shopping cart server after obtaining the user location information;
receiving, from the shopping cart server, a notification that the offline store that sells the product is located within a certain distance from the mobile device;
displaying a notification message corresponding the notification; and
determining whether the user wants to go to the offline store that sells the product and executing an application, such as a map search, arranged to guide the user of the mobile device to the offline store that sells the product.

2. The method of claim 1, further comprising:
transmitting a purchase result of the shopping information to the shopping cart server, in order to delete the purchased shopping information from the shopping cart of the user by the shopping cart server.

3. The method of claim 1, further comprising:
comparing prices of the product at the offline store with the product in the online shopping mall.

4. A method operated by a mobile device and by a shopping cart server for providing a shopping service, the method comprising the method actions of claims 1-3 as operated by the mobile device, as well as the following actions performed by the shopping cart server:
receiving shopping information and offline store information about a product from online shopping mall or mobile device of a user;
registering the shopping information and the offline store information about the product to a shopping cart associated with the user;
receiving location information from the mobile device;
determining whether an offline store that sells a product of the shopping cart is located within a predefined distance based on the location information;
transmitting offline store information to the mobile device, when the offline store is located within the predefined distance.

5. The method of claim 4, further comprising:
receiving a purchase result of the shopping information from the mobile device; and
deleting the purchased shopping information from the shopping cart of the user.

6. The method of claim 4, wherein registering the shopping information and the offline store information comprising:
generating the shopping cart in a database in response to requesting of the user; and
registering one or more shopping information of a plurality of online shopping malls or a plurality of offline stores.

7. The method of claim 4, further comprising:
sharing part of the shopping cart with a third party according to a setting by the mobile device; and
allowing to buy part of product in the shopping cart by the third party.

8. A mobile device for providing shopping service, the mobile device being arranged to:
determine whether a user is performing an online shopping or an offline shopping;
if determined that the user is shopping online for a product, obtain offline store information about the product when the product sold by an online shopping mall is also available in the offline store;
if determined that the user is shopping offline for the product, obtain shopping information and offline store information about the product by recognizing a barcode or a Radio Frequency Identification, RFID, tag;
transmit the shopping information and the offline store information about the product to a shopping cart server, in order to register the shopping information and the offline store information about the product to a shopping cart associated with the user in the shopping cart server;
obtain user location information, e.g., by a GPS receiver of the mobile device or a Location Based Service, LBS;
transmit said user location information to the shopping cart server after obtaining the user location information;
receive, from the shopping cart server, a notification that an offline store that sells the product is located within a certain distance from the mobile device;
display a notification message corresponding the notification; and
determine whether the user wants to go to the offline store that sells the product and execute an application, such as a map search, arranged to guide the user of the mobile device to the offline store that sells the product.

9. The mobile device of claim 8, further configured to:
transmit a purchase result of the shopping information to the shopping cart server, in order to delete the purchased shopping information from the shopping cart of the user by the shopping cart server.

10. The mobile device of claim 8, further configured to:
compare prices of the product at the offline store with the product in the online shopping mall.

11. A system comprising a mobile device and a shopping cart server for providing a shopping service, the mobile device being arranged as claimed in claims 8-10, the shopping cart server being arranged to:
receive shopping information and offline store information about a product from online shopping mall or mobile device of a user;
register the shopping information and the offline store information about the product to a shopping cart associated with the user;
receive location information from the mobile device;
determine whether an offline store that sells a product of the shopping cart is located within a predefined distance based on the location information;
transmit offline store information to the mobile device, when the offline store is located within the predefined distance.

12. The system of claim 11, further configured to:
receive a purchase result of the shopping information from the mobile device; and
delete the purchased shopping information from the shopping cart of the user.

13. The system of claim 11, wherein register the shopping information and the offline store information comprises:
generate the shopping cart in a database in response to requesting of the user; and
register one or more shopping information of a plurality of online shopping malls or a plurality of offline stores.

14. The system of claim 11, further configured to:
share part of the shopping cart with a third party according to setting by the mobile device; and
allow to buy part of product in the shopping cart by the third party.
